# FASCICULE DE BREVET EUROPEEN

(11) **EP 4 536 717 B1**
(45) Date de publication et mention de la délivrance du brevet: **01.07.2026**
(21) Numéro de dépôt: 23728792.5
(22) Date de dépôt: 30.05.2023
(51) Int. Cl.: C08F 210/02, C08F 293/00

(54) **POLYÉTHYLÈNES OU COPOLYMÈRES D'ÉTHYLÈNE ET DE 1,3-DIÈNE COUPLES ET LEUR PROCÉDÉ DE PRÉPARATION**
POLYETHYLENE ODER COPOLYMERE VON ETHYLEN UND 1,3-DIEN-PAAREN UND VERFAHREN ZU IHRER HERSTELLUNG
POLYETHYLENES OR COPOLYMERS OF ETHYLENE AND 1,3-DIENE COUPLES AND PROCESS FOR THEIR PREPARATION

(30) Priorité: 09.06.2022 FR 2205551
(43) Date de publication de la demande: 16.04.2025
(73) Titulaire: COMPAGNIE GENERALE DES ETABLISSEMENTS MICHELIN, 63000 Clermont-Ferrand (FR); Centre National de la Recherche Scientifique, 75794 Paris Cedex 16 (FR); Ecole Superieure de Chimie, Physique, Electronique de Lyon, 69616 Villeurbanne Cedex (FR); Université Claude Bernard Lyon 1, 69622 Villeurbanne Cedex (FR)
(72) Inventeur: BOISSON, Christophe, 01390 TRAMOYES (FR); D'AGOSTO, Franck, 69740 GENAS (FR); DESGRANGES, Ariane, 63040 CLERMONT-FERRAND CEDEX 09 (FR); NGO, Robert, 63040 CLERMONT-FERRAND CEDEX 09 (FR); JEAN-BAPTISTE-DIT-DOMINIQUE, François, 63040 CLERMONT-FERRAND CEDEX 09 (FR)
(74) Mandataire: M.F.P. Michelin
(86) Numéro de dépôt international: PCT/EP2023/064411
(87) Numéro de publication internationale: WO 2023/237380

(56) Documents cités:
- WO-A1-2019/077236
- FR-A1- 2 854 636

## Description

Le domaine de l'invention est celui des polyéthylènes et des copolymères d'éthylène et d'α-oléfines qui sont riches en unités éthylène.

La synthèse de polymères diéniques couplés est très largement décrite par le couplage de chaînes polymères vivantes synthétisées par polymérisation anionique en présence d'un amorceur à base de lithium. La synthèse de polymères diéniques stéréospécifiques par couplage de chaînes polydiènes à fort taux de liaison 1,4-cis est moins décrite en raison de la nature des liaisons mises en jeu dans la synthèse de chaînes polydiènes à fort taux de liaison 1,4-cis en présence d'un catalyseur de type Ziegler Natta. La synthèse de polybutadiènes couplés à fort taux de liaisons 1,4-cis est par exemple décrite dans le document WO 2010085631 par réaction de couplage avec des composés contenant des fonctions nitriles. Dans la synthèse par polymérisation anionique et dans la synthèse par polymérisation stéréospécifique, les réactions mettent en jeu des liaisons σ-alkyle-lithium, c'est-à-dire η²-alkyle-Li, ou des complexes π-allyle, c'est-à-dire des liaisons η³-allyle.

La synthèse de polymères diéniques riches en unités éthylène est réalisée par la polymérisation d'éthylène et d'un 1,3-diène en présence d'un système catalytique à base d'un complexe borohydrido néodymocène et d'un organomagnésien. La polymérisation se distingue des autres polymérisations mentionnées par son mécanisme de polymérisation qui procède par de nombreuses réactions de transfert de chaînes entre l'atome de néodyme et l'atome de magnésium et fait intervenir des espèces réactives complètement différentes. On peut par exemple se référer aux articles ACS Catalysis (2016), 6, 1028-1036 et ACS Catalysis (2019), 9, 9298-9309.

Les Demanderesses ont mis au point un procédé qui permet la préparation de polymères couplés riches en éthylène. Le procédé s'applique aussi bien aux polyéthylènes qu'aux copolymères diéniques riches en éthylène, et a aussi l'avantage de conduire à des taux de couplage élevés dans des modes de réalisation particuliers de l'invention.

Un premier objet de l'invention est un procédé de préparation d'un polymère couplé qui contient plus de 50% en mole d'éthylène, pourcentage molaire exprimé par rapport à la totalité des unités monomères du polymère, le polymère étant un polyéthylène ou un copolymère d'éthylène et d'un 1,3-diène et éventuellement d'un composé vinylaromatique, lequel procédé comprend les étapes successives a), b) et c)
- l'étape a) étant une réaction de polymérisation des monomères en présence d'un système catalytique à base au moins d'un métallocène de formule (I) et d'un halogénure d'un alkylmagnésien de formule (II)

   {P(Cp¹)(Cp²)Nd(BH₄)_{(1+y)-}L_{y}-Nₓ} (I)

   XMgR (II)

   Cp¹ et Cp², identiques ou différents, étant choisis dans le groupe constitué par les groupes fluorényles, les groupes cyclopentadiényles et les groupes indényles, les groupes étant substitués ou non substitués,
   P étant un groupe pontant les deux groupes Cp¹ et Cp², et comprenant un atome de silicium ou de carbone,
   Nd désignant l'atome de néodyme,
   L représentant un métal alcalin choisi dans le groupe constitué par le lithium, le sodium et le potassium,
   N représentant une molécule d'un éther,
   x, nombre entier ou non, étant égal ou supérieur à 0,
   y, nombre entier, étant égal ou supérieur à 0,
   X étant un atome d'halogène et R un alkyle,
- l'étape b) étant la réaction du produit de réaction de l'étape a) avec un composé ayant au moins deux fonctions nitrile, préférentiellement chacune substituant un groupe aromatique, distinct ou non,
- l'étape c) étant une réaction d'hydrolyse
   le polymère étant un polyéthylène ou un copolymère d'éthylène et d'un 1,3-diène et éventuellement d'un composé vinylaromatique.

Un deuxième objet de l'invention est un polymère couplé, polymère constitué de chaînes polymères qui contiennent plus de 50% en mole d'unités éthylène et qui sont reliées entre elles par un groupement contenant au moins deux fonctions cétone, chacune des fonctions cétones étant liées de façon covalente à une unité monomère d'une chaîne polymère distincte, lequel polymère est un polyéthylène, un copolymère d'éthylène et d'un 1,3-diène et éventuellement d'un composé vinylaromatique, lequel polymère est susceptible d'être obtenu par le procédé conforme à l'invention.

### Description

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Sauf indication contraire, les taux des unités résultant de l'insertion d'un monomère dans un polymère sont exprimés en pourcentage molaire par rapport à la totalité des unités résultant de la polymérisation des monomères.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage.

Par l'expression « à base de » utilisée pour définir les constituants du système catalytique, on entend le mélange de ces constituants, ou le produit de la réaction d'une partie ou de la totalité de ces constituants entre eux.

L'étape a) du procédé conforme à l'invention est une réaction de polymérisation qui permet de préparer les chaînes polymères, chaînes en croissance destinées à réagir dans l'étape suivante, étape b), avec un agent de couplage, un composé ayant au moins deux fonctions nitrile. L'étape b) est une réaction de couplage.

Selon une première alternative, la réaction de polymérisation est la polymérisation de l'éthylène. Selon cette alternative, le produit de réaction de la polymérisation de l'étape a) est une chaîne polymère dont les unités constitutives résultent de l'insertion de l'éthylène. Le polymère préparé par la première alternative est un homopolymère d'éthylène, un polyéthylène.

Selon une deuxième alternative, la réaction de polymérisation est la polymérisation d'un mélange monomère d'éthylène et d'un 1,3-diène. Selon cette alternative, le produit de réaction de la polymérisation de l'étape a) est une chaîne polymère dont les unités constitutives résultent de l'insertion de l'éthylène et du 1,3-diène. Le polymère préparé par la deuxième alternative est un copolymère d'éthylène et d'un 1,3-diène.

Selon une troisième alternative de l'invention, la réaction de polymérisation est la polymérisation d'un mélange monomère d'éthylène, d'un 1,3-diène et d'un composé vinylaromatique. Selon cette alternative, le produit de réaction de la polymérisation de l'étape a) est une chaîne polymère dont les unités constitutives résultent de l'insertion de l'éthylène, du 1,3-diène et du composé vinylaromatique. Le polymère préparé par la troisième alternative est un copolymère d'éthylène, d'un 1,3-diène et d'un composé vinylaromatique.

Le 1,3-diène du mélange monomère de l'étape a) utile aux besoins de la deuxième alternative et de la troisième alternative est un seul composé, c'est-à-dire un seul (en anglais « one ») 1,3-diène, ou un mélange de 1,3-diènes qui se différencient les uns des autres par la structure chimique. Conviennent comme 1,3-diène les 1,3-diènes ayant de 4 à 20 atomes de carbone, tels que le 1,3-butadiène, l'isoprène, le myrcène, le β-farnésène et leurs mélanges. Le 1,3-diène est de préférence le 1,3-butadiène, l'isoprène, le myrcène, le β-farnésène ou leurs mélanges, en particulier un mélange d'au moins deux d'entre eux.

Le composé vinylaromatique du mélange monomère de l'étape a) utile aux besoins de la troisième alternative est un seul composé, c'est-à-dire un seul (en anglais « one ») composé vinylaromatique ou un mélange de composés vinylaromatiques qui se différencient les uns des autres par la structure chimique. On entend par composé vinylaromatique un composé aromatique substitué par une fonction vinyle de formule bien connue (-CH=CH₂). Conviennent tout particulièrement comme composé vinylaromatique les composés ayant un groupe aryle substitué par une fonction vinyle, plus particulièrement les composés ayant un groupe phényle substitué par une fonction vinyle. Le composé vinylaromatique est préférentiellement le styrène ou un styrène dont le noyau benzénique est substitué par des groupes alkyles. Le composé vinylaromatique est plus préférentiellement le styrène. Le copolymère préparé par un mode de réalisation préférentiel de la troisième alternative est un copolymère d'éthylène, d'un 1,3-diène et de styrène.

De préférence, le mélange monomère à polymériser dans l'étape a) selon la deuxième alternative et la troisième alternative contient plus de 50% en mole d'éthylène, le pourcentage étant exprimé par rapport au nombre total de moles de monomères du mélange monomère de l'étape a). Lorsque le mélange monomère contient un composé vinylaromatique, tel que le styrène, il contient préférentiellement moins de 40% en mole du composé vinylaromatique, le pourcentage étant exprimé par rapport au nombre total de moles de monomères du mélange monomère de l'étape a).

La polymérisation des monomères peut être conduite conformément aux demandes de brevet WO 2007054223 A2 et WO 2007054224 A2. Le système catalytique (ou composition catalytique) utilisé pour polymériser les monomères est composé d'un métallocène et d'un halogénure d'un alkylmagnésien.

Dans la présente demande, on entend par métallocène un complexe organométallique dont le métal, en l'espèce l'atome de néodyme, est lié à une molécule nommée ligand et constituée de deux groupes Cp¹ et Cp² reliés entre eux par un pont P. Ces groupes Cp¹ et Cp², identiques ou différents, sont choisis dans le groupe constitué par les groupes fluorényles, les groupes cyclopentadiényles et les groupes indényles, ces groupes pouvant être substitués ou non substitués.

Selon l'invention, le métallocène utilisé comme constituant de base dans le système catalytique répond à la formule (la)

{P(Cp¹)(Cp²)Nd(BH₄)_{(1+y)-}L_{y}-Nₓ} (I)

P étant un groupe pontant les deux groupes Cp¹ et Cp², et comprenant un atome de silicium ou de carbone,
Cp¹ et Cp², identiques ou différents, étant choisis dans le groupe constitué par les groupes fluorényles, les groupes cyclopentadiényles et les groupes indényles, les groupes étant substitués ou non substitués,
Nd désignant l'atome de néodyme,
L représentant un métal alcalin choisi dans le groupe constitué par le lithium, le sodium et le potassium,
N représentant une molécule d'un éther,
x, nombre entier ou non, étant égal ou supérieur à 0,
y, nombre entier, étant égal ou supérieur à 0.

Dans la formule (I), l'atome de néodyme est relié à une molécule de ligand constitué des deux groupes Cp¹ et Cp² reliés entre eux par un pont P. De préférence, le symbole P, désigné sous le terme de pont, répond à la formule ZR¹R², Z représentant un atome de silicium ou de carbone, R¹ et R², identiques ou différents, représentant un groupe alkyle comprenant de 1 à 20 atomes de carbone. De manière plus préférentielle, le pont P est de formule SiR¹R², R¹ et R², étant identiques et tels que définis précédemment. De manière encore plus préférentielle, P répond à la formule SiMe₂.

Dans la formule (I), comme éther convient tout éther qui a le pouvoir de complexer le métal alcalin, notamment le diéthyléther, le méthyltétrahydrofurane et le tétrahydrofurane, préférentiellement le tétrahydrofurane.

A titre de groupes cyclopentadiényles, fluorényles et indényles substitués, on peut citer ceux substitués par des groupes ayant 1 à 6 atomes de carbone ou par des groupes ayant 6 à 12 atomes de carbone ou encore par des groupes trialkylsilyles tels que SiMe₃. Lorsque les ligands Cp¹ et Cp² sont substitués, ils sont préférentiellement substitués par des groupes méthyles, par des groupes butyles, notamment tertiobutyles, ou par des groupes triméthylsilyles. Le choix des groupes est aussi orienté par l'accessibilité aux molécules correspondantes que sont les cyclopentadiènes, les fluorènes et indènes substitués, parce que ces derniers sont disponibles commercialement ou facilement synthétisables.

A titre de groupes fluorényles substitués, on peut citer ceux substitués en position 2, 7, 3 ou 6, particulièrement le 2,7-ditertiobutyle-fluorényle, le 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

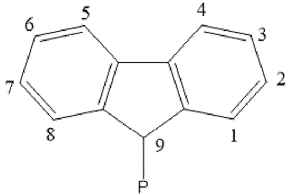

A titre de groupes cyclopentadiényles substitués, on peut citer ceux substitués aussi bien en position 2 (ou 5) qu'en position 3 (ou 4), particulièrement ceux substitués en position 2, plus particulièrement le groupe tétraméthylcyclopentadiènyle. La position 2 (ou 5) désigne la position de l'atome de carbone qui est adjacent à l'atome de carbone auquel est attaché le pont P, comme cela est représenté dans le schéma ci-après. On rappelle qu'une substitution en position 2 ou 5 est également dénommée substitution en alpha du pont.

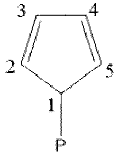

A titre de groupes indényles substitués, on peut citer particulièrement ceux substitués en position 2, plus particulièrement le 2-méthylindényle, le 2-phénylindényle. La position 2 désigne la position de l'atome de carbone qui est adjacent à l'atome de carbone auquel est attaché le pont P, comme cela est représenté dans le schéma ci-après.

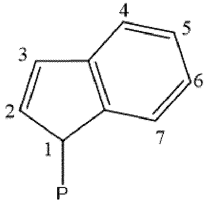

De préférence, Cp¹ et Cp², identiques ou différents, sont des cyclopentadiényles substitués en alpha du pont, des fluorényles substitués, des indényles substitués ou fluorényle de formule C₁₃H₈ ou bien indényle de formule C₉H₆. De manière plus préférentielle, Cp¹ et Cp², identiques ou différents, sont des groupes fluorényles substitués ou des groupes fluorényles non substitués de formule C₁₃H₈. Avantageusement, Cp¹ et Cp² sont des groupes fluorényles non substitués de formule C₁₃H₈, représentés par le symbole Flu.

Mieux, le métallocène est de formule (I-1), (I-2), (I-3), (I-4) ou (1-5) :

[Me₂Si(Flu)₂Nd(µ-BH₄)₂Li(THF)] (I-1)

[{Me₂SiFlu₂Nd(µ-BH₄)₂Li(THF)}₂] (I-2)

[Me₂SiFlu₂Nd(µ-BH₄)(THF)] (I-3)

[{Me₂SiFlu₂Nd(µ-BH₄)(THF)}₂] (I-4)

[Me₂SiFlu₂Nd(µ-BH₄)] (I-5)

dans laquelle Flu représente le groupe C₁₃H₈.

Le métallocène utile à la synthèse du système catalytique peut se trouver sous la forme de poudre cristallisée ou non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224 A2 ou WO 2007054223 A2. Le métallocène peut être préparé de façon traditionnelle par un procédé analogue à celui décrit dans la demande de brevet WO 2007054224 A2 ou WO 2007054223 A2, notamment par réaction dans des conditions inertes et anhydres du sel d'un métal alcalin du ligand avec un borohydrure de la terre rare, le néodyme, dans un solvant adapté, tel un éther, comme le diéthyléther ou le tétrahydrofurane ou tout autre solvant connu de l'homme du métier. Après réaction, le métallocène est séparé des sous-produits de réaction par les techniques connues de l'homme du métier, telles que la filtration ou la précipitation dans un second solvant. Le métallocène est au final séché et isolé sous forme solide.

L'halogénure d'un alkylmagnésien, autre constituant de base du système catalytique, est le co-catalyseur du système catalytique. Il est préférentiellement un chlorure d'un alkylmagnésien ou un bromure d'un alkylmagnésien, plus préférentiellement un chlorure d'un alkylmagnésien. L'alkyle peut être linéaire ou ramifié, de préférence linéaire. L'alkyle contient préférentiellement 2 à 10 atomes de carbone. Comme alkyle conviennent particulièrement les groupes éthyle, propyle, butyle, pentyle, hexyle, heptyle, octyle. De manière plus préférentielle, l'alkyle représenté par le symbole R dans la formule (II) est un alkyle linéaire contenant 2 à 10 atomes de carbone. A ce titre conviennent comme halogénure d'un alkylmagnésien le chlorure d'éthylmagnésium, le chlorure de n-butylmagnésium, le chlorure de n-pentylmagnésium, le bromure d'éthylmagnésium, le bromure de n-butylmagnésium, le bromure de n-pentylmagnésium, le chlorure de n-octylmagnésium, le bromure de n-octylmagnésium. L'alkyle représenté par le symbole R dans la formule (II) est encore plus préférentiellement éthyle, n-propyle, n-butyle, n-pentyle ou n-octyle, plus préférentiellement n-butyle.

Les composés de formule (II) qui sont des réactifs de Grignard sont bien connus, même certains d'entre eux sont des produits commerciaux. Pour leur synthèse, on peut par exemple se référer aussi à la collection de volumes de « Organic Synthesis ». Comme tout composé organomagnésien, le composé halogénure d'un alkylmagnésien constituant le système catalytique peut se présenter sous la forme d'une entité monomère ou sous la forme d'une entité polymère. Par ailleurs, qu'il soit sous la forme d'une entité monomère ou polymère, l'halogénure d'un alkylmagnésien peut également se présenter sous la forme d'une entité coordinée par une ou plusieurs molécules d'un solvant, de préférence d'un éther tel que le diéthyléther, le tétrahydrofurane ou le méthyltétrahydrofurane.

L'utilisation d'un halogénure d'un alkylmagnésien de formule (II) dans l'étape a) du procédé conforme à l'invention permet la synthèse de polymères couplés, qu'il s'agisse de polyéthylène ou de copolymère d'éthylène et d'un 1,3-diène et éventuellement d'un composé vinylaromatique, de préférence le styrène.

Les quantités de co-catalyseur et de métallocène mises en réaction sont telles que le rapport entre le nombre de moles de Mg du co-catalyseur et le nombre de moles de la terre rare du métallocène, le néodyme, va de préférence de 0,5 à 200, de manière plus préférentielle de 1 à moins de 20. Ces plages préférentielles peuvent s'appliquer à l'un quelconque des modes de réalisation de l'invention. La plage de valeurs allant de 1 à moins de 20 est notamment plus favorable pour l'obtention de copolymères de masses molaires élevées.

Selon un mode de réalisation, le système catalytique peut être préparé de façon traditionnelle par un procédé analogue à celui décrit dans les demandes de brevet WO 2007054224 A2 ou WO 2007054223 A2. Par exemple on fait réagir dans un solvant hydrocarboné le co-catalyseur, en l'espèce l'halogénure d'un alkylmagnésien et le métallocène typiquement à une température allant de 20 à 80°C pendant une durée comprise entre 5 et 60 minutes. Le système catalytique est généralement préparé dans un solvant hydrocarboné, aliphatique comme le méthylcyclohexane ou aromatique comme le toluène. Généralement après sa synthèse, le système catalytique est utilisé en l'état pour l'étape a).

Selon un autre mode de réalisation, le système catalytique peut être préparé par un procédé analogue à celui décrit dans la demande de brevet WO 2017093654 A1 ou dans la demande de brevet WO 2018020122 A1 : il est dit de type préformé. Par exemple on fait réagir dans un solvant hydrocarboné l'halogénure d'un alkylmagnésien et le métallocène typiquement à une température de 20 à 80°C pendant 10 à 20 minutes pour obtenir un premier produit de réaction, puis avec ce premier produit de réaction on fait réagir à une température allant de 40 à 90°C pendant 1h à 12h un monomère de préformation. Le monomère de préformation est utilisé de préférence selon un rapport molaire (monomère de préformation / métal du métallocène) allant de 5 à 1000, préférentiellement de 10 à 500. Avant son utilisation en polymérisation, le système catalytique de type préformé peut être stocké sous atmosphère inerte, notamment à une température allant de -20°C à la température ambiante (23°C). Selon ce deuxième mode de réalisation, le système catalytique de type préformé a pour constituant de base un monomère de préformation choisi parmi les 1,3-diènes, l'éthylène et leurs mélanges. En d'autres termes, le système catalytique dit préformé contient outre le métallocène et le co-catalyseur un monomère de préformation. Le 1,3-diène à titre de monomère de préformation peut être le 1,3-butadiène, l'isoprène ou encore un 1,3-diène de formule CH₂=CR¹-CH=CH₂, le symbole R¹ représentant un groupe hydrocarboné ayant 3 à 20 atomes de carbone, en particulier le myrcène ou le β-farnésène. Le monomère de préformation est préférentiellement le 1,3-butadiène.

Le système catalytique se présente typiquement dans un solvant qui est préférentiellement le solvant dans lequel il a été préparé, et la concentration en métal de la terre rare, c'est-à-dire en néodyme, de métallocène est alors comprise dans un domaine allant préférentiellement de 0,0001 à 0,2 mol/L plus préférentiellement de 0,001 à 0,03 mol/L.

Comme toute synthèse faite en présence de composé organométallique, la synthèse du métallocène, la synthèse de l'halogénure d'un alkylmagnésien et la synthèse du système catalytique ont lieu dans des conditions anhydres sous atmosphère inerte. Typiquement, les réactions sont conduites à partir de solvants et de composés anhydres sous azote ou argon anhydre.

La polymérisation du mélange monomère est conduite de préférence en solution, en continu ou discontinu. Le solvant de polymérisation est typiquement un solvant hydrocarboné, aromatique ou aliphatique, tels que le toluène, le cyclohexane, le méthylcyclohexane ou bien le mélange de deux d'entre eux ou encore le mélange des trois. Le mélange monomère peut être introduit dans le réacteur contenant le solvant de polymérisation et le système catalytique ou inversement le système catalytique peut être introduit dans le réacteur contenant le solvant de polymérisation et le mélange monomère. Le mélange monomère et le système catalytique peuvent être introduits simultanément dans le réacteur contenant le solvant de polymérisation, notamment dans le cas d'une polymérisation en continu. La polymérisation est conduite typiquement dans des conditions anhydres et en l'absence d'oxygène, en présence éventuelle d'un gaz inerte. La température de polymérisation varie généralement dans un domaine allant de 40 à 150°C, préférentiellement 40 à 120°C. L'homme du métier adapte les conditions de polymérisation telles que la température de polymérisation, la concentration en chacun des réactifs, la pression du réacteur en fonction de la composition du mélange monomère, du réacteur de polymérisation, de la microstructure et de la macrostructure souhaitées de la chaîne copolymère.

La polymérisation est conduite préférentiellement à pression constante en monomères. Un ajout continu de chacun des monomères ou de l'un d'eux peut être réalisé dans le réacteur de polymérisation, auquel cas le réacteur de polymérisation est un réacteur alimenté. Ce mode de réalisation est tout particulièrement adapté pour une incorporation statistique des monomères.

Selon un mode de réalisation préférentiel de l'invention, la polymérisation de l'étape a) est une polymérisation statistique, ce qui se traduit par une incorporation statistique des monomères du mélange monomère utilisé dans l'étape a). Ce mode de réalisation qui permet de préparer des chaînes polymères statistiques dans l'étape a) est adapté pour la synthèse de polymères statistiques couplés.

Selon un autre mode de réalisation préférentiel de l'invention, la polymérisation de l'étape a) comprend la polymérisation statistique d'un premier mélange monomère contenant de l'éthylène et un 1,3-diène, suivi de la polymérisation d'un deuxième mélange monomère de composition différente du premier monomère, par exemple parce qu'il est dépourvu dudit 1,3-diène ou de tout 1,3-diène. Ce mode de réalisation qui permet de préparer des chaînes polymères à blocs dans l'étape a) est adapté pour la synthèse de polymères à blocs couplés.

Une fois que le taux de conversion des monomères souhaité est atteint dans la réaction de polymérisation de l'étape a), on procède à l'étape b).

L'étape b) du procédé conforme à l'invention met en présence un agent de couplage, un composé ayant au moins deux fonctions nitrile, avec le produit de réaction de l'étape a).

De préférence, l'étape b) est conduite aussi dans un solvant hydrocarboné. Avantageusement, elle est conduite dans le milieu réactionnel issu de l'étape a). Elle est généralement mise en œuvre par l'ajout du composé ayant au moins deux fonctions nitrile au produit de réaction de l'étape a) dans son milieu réactionnel sous agitation.

Avant l'ajout du composé ayant au moins deux fonctions nitrile, le réacteur est de préférence dégazé et inerté. Le dégazage du réacteur permet d'éliminer les monomères résiduels gazeux et facilite aussi l'ajout du composé ayant au moins deux fonctions nitrile dans le réacteur. L'inertage du réacteur, par exemple à l'azote, permet de ne pas désactiver les liaisons carbone métal présentes dans le milieu réactionnel et nécessaires à la réaction de couplage du polymère. Le composé ayant au moins deux fonctions nitrile peut être ajouté pur ou dilué dans un solvant hydrocarboné, aliphatique ou aromatique. Le composé ayant au moins deux fonctions nitrile est laissé au contact du produit de réaction de l'étape a), de préférence sous agitation, durant le temps nécessaire à la réaction de couplage. La réaction de couplage peut être suivie typiquement par analyse chromatographique pour suivre la consommation du composé ayant au moins deux fonction nitrile. La réaction de couplage est conduite préférentiellement à une température allant de 23 à 120°C, préférentiellement de 40°C à 100°C.

La réaction de couplage, étape b), est conduite préférentiellement avec un équivalent molaire de fonction nitrile par rapport au nombre de liaisons carbone-magnésium par mole de co-catalyseur, l'halogénure d'un organomagnésien. Le ratio entre le nombre d'équivalent molaire de fonction nitrile et le nombre de liaisons carbone-magnésium par mole de co-catalyseur peut cependant varier selon le taux souhaité de polymère couplé dans le polymère obtenu à l'issue de l'étape c). Un ratio proche de 1, typiquement variant de 0.95 à 1.05, favorise les taux de couplage les plus élevés. Typiquement dans un halogénure d'un organomagnésien comme le chlorure de n-butylmagnésium, il y a une liaison carbone-magnésium par mole du magnésien, alors que dans un diorganomagnésien comme le butyloctylmagnésium (BOMAG) il y a deux liaisons carbone-magnésium par mole du magnésien. Une mole d'un composé ayant deux fonctions nitrile équivaut à deux équivalents molaires de fonction nitrile ; plus généralement, une mole d'un composé ayant n fonctions nitrile équivaut à n équivalents molaires de fonction nitrile, n étant un entier supérieur ou égal à 2.

Le composé ayant au moins deux fonctions nitrile peut être un composé aliphatique ou un composé aromatique, de préférence aromatique. Le composé ayant au moins deux fonctions nitrile est typiquement un composé ayant une chaîne hydrocarbonée substituée par au moins deux fonctions nitrile. La chaîne hydrocarbonée du composé ayant au moins deux fonctions nitrile peut être linéaire, cyclique ou ramifiée.

Selon l'un quelconque des modes de réalisation de l'invention, le composé ayant au moins deux fonctions nitrile est un composé dans lequel le nombre de fonctions nitrile est préférentiellement de deux ou de trois, plus préférentiellement de deux.

Selon un premier mode de réalisation de l'invention, le composé ayant au moins deux fonctions nitrile est un alcane substitué par lesdites fonctions nitrile, préférentiellement par deux fonctions nitrile ou trois fonctions nitrile, plus préférentiellement par deux fonctions nitrile. La longueur de la chaîne hydrocarbonée de l'alcane substitué par une fonction nitrile n'est pas limitée en soi et le nombre de carbone de la chaîne hydrocarbonée peut varier dans une large mesure, par exemple de 1 à 11 atomes de carbone. Le choix d'un alcane substitué par au moins deux fonctions nitrile peut être motivé parce qu'il est disponible commercialement ou facilement synthétisable. Conviennent le 1,2-dicyanoéthane ou succinonitrile, le 1,3-dicyanopropane ou glutaronitrile, le 1,4-dicyanobutane ou adiponitrile, le 1,5-dicyanopentane, le 1,6-dicyanohexane, le 1,2,3-propanetricarbonitrile, le 1,3,5-pentanetricarbonitrile, préférentiellement le succinonitrile, le glutaronitrile, l'adiponitrile.

Selon un deuxième mode de réalisation particulièrement préférentiel, le composé ayant au moins deux fonctions nitrile est un composé ayant au moins deux fonctions nitrile, chacune substituant un groupe aromatique, distinct ou non. Le composé ayant au moins deux fonctions nitrile est plus préférentiellement le benzène substitué par lesdites fonctions nitrile, de préférence deux fonctions nitrile ou trois fonctions nitrile, de manière plus préférentielle deux fonctions nitrile. Conviennent par exemple le 1,3-dicyanobenzène, le 1,4-dicyanobenzene, le 1,3,5-tricyanobenzène préférentiellement le 1,3-dicyanobenzène et le 1,4-dicyanobenzene.

Une fois l'extrémité de chaîne modifiée, l'étape b) est suivie de l'étape c). L'étape c) est typiquement une réaction d'hydrolyse qui permet de former la fonction cétone dans la chaîne polymère et le cas échéant de désactiver les sites réactifs encore présents dans le milieu réactionnel. La réaction d'hydrolyse est réalisée généralement par ajout d'eau au milieu réactionnel ou inversement, éventuellement en présence d'un acide. Typiquement, le milieu réactionnel résultant de l'étape b) est mis en présence d'une solution aqueuse d'acide chlorhydrique. La réaction d'hydrolyse peut être conduite à une température allant de 0°C à 100°C, préférentiellement à température ambiante (23°C) ou à la température de la réaction de l'étape b) ou encore à une température comprise dans un domaine allant de la température ambiante à la température de la réaction de l'étape b).

A l'issue de l'étape c), le polymère peut être séparé du milieu réactionnel selon des procédés bien connus de l'homme du métier, par exemple par une opération d'évaporation du solvant sous pression réduite ou par une opération de stripping à la vapeur d'eau ou par précipitation du polymère. Selon une variante de l'invention, l'étape c) et la séparation du polymère du milieu réactionnel peuvent être conduites dans la même opération, par exemple une opération de stripping à la vapeur d'eau, notamment en présence d'un acide.

Les polymères qui peuvent être synthétisés par le procédé conforme à l'invention ont pour caractéristique d'être des polymères couplés qui sont typiquement obtenus par réaction de couplage de chaînes polymères avec un agent de couplage, en l'espèce le composé ayant au moins deux fonctions nitrile. De manière connue, un polymère couplé est constitué de chaînes polymères qui sont reliées entre elle de façon covalente par l'intermédiaire d'un groupement (en anglais « moiety »). Selon l'invention, le groupement provient des réactions de couplage entre les chaînes polymères et l'agent de couplage et de la réaction d'hydrolyse qui ont lieu respectivement au cours des étapes b) et c) du procédé conforme à l'invention. L'homme du métier comprendra que le groupement n'est pas à confondre avec une unité monomère du polymère. Dans le cas présent, le groupement contient au moins deux fonctions cétone. Chacune des fonctions cétones du groupement est liée de façon covalente à une unité monomère d'une chaîne polymère distincte. Les polymères selon l'invention sont donc constitués de chaînes polymères qui sont reliées entre elles par ledit groupement. Ils contiennent plus de 50% en mole d'unités éthylène et sont des polyéthylènes, des copolymères d'éthylène et d'un 1,3-diène et éventuellement d'un composé vinylaromatique, préférentiellement le styrène.

Selon un mode de réalisation préférentiel de l'invention, le groupement contenant au moins deux fonctions cétone est un groupement dans lequel lesdites fonctions cétone substituent chacune un groupe aromatique, distinct ou non, de préférence un phényle. Le nombre de fonctions cétone dudit groupement est avantageusement de deux ou de trois, très avantageusement de deux.

De préférence, le copolymère contient aussi des motifs cycliques 1,2-cyclohexane. Les motifs cycliques 1,2-cyclohexane sont de formule (IV).

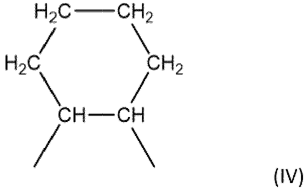

Lorsque le copolymère contient des motifs cycliques 1,2-cyclohexane, il est un copolymère selon un mode de réalisation particulier de l'invention dans lequel le 1,3-diène est le 1,3-butadiène ou un mélange de 1,3-diènes dont un est le 1,3-butadiène et dans lequel les motifs cycliques résultent d'une insertion particulière des monomères éthylène et 1,3-butadiène dans la chaîne polymère, en plus des unités conventionnelles d'éthylène et de 1,3-butadiène, respectivement -(CH₂-CH₂)-, (CH₂-CH=CH-CH₂)- et (CH₂-CH(C=CH₂))-. Il est notamment obtenu par le procédé conforme à l'invention selon le mode de réalisation dans lequel le métallocène du système catalytique a pour ligand deux groupes fluorényles, substitués ou non. Le mécanisme d'obtention d'une telle microstructure est par exemple décrit dans le document Macromolecules 2009, 42, 3774-3779. Lorsque le polymère conforme à l'invention contient des motifs cycliques 1,2-cyclohexane, il en contient préférentiellement au plus 15% en mole, le pourcentage étant exprimé par rapport à l'ensemble des unités résultant de la polymérisation des monomères du mélange monomère.

Lorsque le polymère conforme à l'invention est un polymère de plusieurs monomères, les chaînes polymères constitutives du polymère peuvent être à blocs ou statistiques.

Selon le mode de réalisation de l'invention dans lequel les chaînes polymères constitutives du polymère sont statistiques, le copolymère conforme à l'invention est statistique et peut être obtenu selon le mode de réalisation particulier du procédé conforme à l'invention qui met en œuvre dans l'étape a) la polymérisation statistique d'un mélange monomère.

Selon le mode de réalisation de l'invention dans lequel les chaînes polymères constitutives du polymère sont à blocs, le copolymère conforme à l'invention est à blocs et peut être obtenu selon le mode de réalisation particulier du procédé conforme à l'invention qui met en œuvre dans l'étape a) la polymérisation statistique d'un premier mélange monomère contenant de l'éthylène et un 1,3-diène, suivie de la polymérisation d'un deuxième mélange monomère de composition différente du premier mélange monomère, parce qu'il est par exemple dépourvu du 1,3-diène.

Le polymère conforme à l'invention, qu'il s'agisse d'un copolymère ou d'un polyéthylène, peut être utilisé dans des compositions contenant un ou plusieurs ingrédients ou constituants autres que le polymère conforme à l'invention, par exemple des additifs traditionnellement utilisés dans des compositions polymères comme des antioxydants, des plastifiants, des pigments, des charges.

Les caractéristiques précitées de la présente invention, ainsi que d'autres, seront mieux comprises à la lecture de la description suivante des exemples de réalisation de l'invention, donnés à titre illustratif et non limitatif.

### Exemples

### Caractérisation des polymères :

Chromatographie d'exclusion stérique haute température (SEC-HT) pour caractériser les polyéthylènes :
Les analyses de chromatographie d'exclusion stérique à haute température (SEC-HT) ont été réalisées avec un appareil Viscotek (Malvern Instruments) équipé de 3 colonnes (PLgel Olexis 300 mm x 7 mm I. D. de Agilent Technologies) et de 3 détecteurs (réfractomètre et viscosimètre différentiels, et diffusion de la lumière). 200 µL d'une solution de l'échantillon à une concentration de 8 mg mL⁻¹ ont été élués dans le 1,2,4-trichlorobenzène en utilisant un débit de 1 mL min⁻¹ à 150 °C. La phase mobile a été stabilisée par du 2,6-di(*tert*-butyl)-4-méthylphénol (400 mg L⁻¹). Le logiciel OmniSEC a été utilisé pour l'acquisition et l'analyse des données. Les masses molaires moyennes en nombre (*M*ₙ) et en masse (*M*_{w}) des polyéthylènes synthétisés ont été calculées en utilisant une courbe de calibration obtenue à partir de polyéthylènes standards (*M*ₚ : 338, 507, 770, 1890, 17 000, 27 300, 43 400, 53 100, 65 700, 78 400 g mol⁻¹) de Polymer Standard Service (Mainz).

Chromatographie d'exclusion stérique THF (SEC-THF) pour caractériser les copolymères d'éthylène et de 1,3-butadiène :
Les analyses de chromatographie d'exclusion stérique ont été réalisées avec un appareil Viscotek (Malvern Instruments) équipé de 3 colonnes (SDVB, 5 µm, 300 x 7,5 mm de Polymer Standard Service), d'une colonne de garde et de 3 détecteurs (réfractomètre et viscosimètre différentiels, et diffusion de la lumière). 1 mL d'une solution de l'échantillon de concentration 5 mg mL⁻¹ dans le THF a été filtré sur une membrane PTFE de 0,45 µm. 100 µL de cette solution ont été élués dans le THF en utilisant un débit de 0,8 mL min⁻¹ à une température de 35 °C. Le logiciel OmniSEC a été utilisé pour l'acquisition et l'analyse des données. Les masses molaires en nombre (*M*ₙ) et en masse (*M*_{w}) des copolymères d'éthylène et de 1,3-butadiène synthétisés ainsi que leur dispersité (D) ont été calculées en utilisant une courbe de calibration universelle obtenue à partir de polystyrènes standards (*M*ₚ : 1306 à 2 520 000 g mol⁻¹) de Polymer Standard Service (Mainz).

Résonance magnétique nucléaire (RMN) :
La spectroscopie RMN haute résolution des polymères a été effectuée sur un spectromètre Bruker 400 Avance III opérant à 400 MHz équipé d'une sonde BBFO 5 mm pour le proton et sur un spectromètre Bruker 400 Avance Il opérant à 400 MHz équipé d'une sonde PSEX ¹³C 10 mm pour le carbone. Les acquisitions ont été faites dans un mélange de tétrachloroéthylène (TCE) et de benzène deutéré (C₆D₆) (2/1 v/v) à 363 K pour les homopolymères d'éthylène, et dans le chloroforme deutéré (CDCl₃) à 298 K pour les copolymères d'éthylène et de 1,3-butadiène. Les échantillons ont été analysés à une concentration de 1 % en masse pour le proton et 5 % en masse pour le carbone. Les déplacements chimiques sont donnés en ppm, relativement au signal proton du benzène deutéré fixé à 7,16 ppm (respectivement du chloroforme deutéré à 7,26 ppm) et au signal du carbone du TCE fixé à 120,65 ppm.

### Préparation des polymères :

Le métallocène [{Me₂SiFlu₂Nd(µ-BH₄)₂Li(THF) }]₂ est préparé selon le mode opératoire décrit dans la demande de brevet WO 2007054224.

Le butyloctylmagnésium BOMAG (20% dans l'heptane, à 0.88 mol L⁻¹) provient de Chemtura et est stocké dans un tube de Schlenk sous atmosphère inerte.

Sauf indication contraire, les halogénures de magnésium proviennent de Sigma-Aldrich. L'éthylène, de qualité N35, provient de la société Air Liquide et est utilisé sans purification préalable.

Le 1,3-butadiène est purifié sur gardes d'alumine. Le toluène est purifié sur gardes d'alumine. Dans les modes opératoires décrits, on entend par « canuler » transférer à l'aide d'une canule.

### Synthèse de polyéthylènes couplés :

### Exemple 1 :

198 mL de toluène prélevés à la fontaine à solvants (SPS800 MBraun) sont introduits dans un ballon de 250 mL inerté et équipé d'une olive aimantée. 2,0 mL d'une solution de chlorure de butylmagnésium à 2,0 M dans le diéthyléther (4,0 mmol, 20 mM dans le mélange toluène/diéthyléther 98/2 mol/mol) sont introduits dans le ballon sous agitation. 8,0 mg (12,5 µmol en néodyme) de {(Me₂Si(C₁₃H₈)₂)Nd(µ-BH₄)[(µ-BH₄)Li(THF)]}₂ sont ensuite introduits dans le ballon. La solution catalytique est canulée dans un réacteur de 250 mL sous atmosphère inerte. La pression dans le réacteur est réduite à 0,5 bar puis le réacteur est pressurisé à 4 bars d'éthylène et la température est amenée simultanément à 80 °C. La pression est maintenue constante dans le réacteur à l'aide d'un réservoir contenant de l'éthylène. Quand la quantité d'éthylène désirée a été consommée, ici après 17 min, le réacteur est dégazé et 10 mL (5 %) de la solution de polymère sont canulés hors du réacteur, puis le polymère est précipité dans du méthanol, récupéré par filtration et séché. Il est noté PE1NF.

243 mg de 1,3-dicyanobenzène (1,9 mmol, 1 équivalent molaire de fonction nitrile/liaison carbone-Mg) dissout dans 5 mL de toluène sont ajoutés à la solution de polymère restant dans le réacteur. Après 40 min d'agitation à 80 °C, 3 mL d'une solution aqueuse d'acide chlorhydrique à 15 % sont ajoutés pour désactiver le système et la température est ramenée à 20 °C. La solution de polymère est versée sur du méthanol sous agitation pour précipiter le polymère. Le polymère précipité (PE1F) est filtré, lavé au méthanol, puis séché sous vide à 80 °C et caractérisé.

4,44 g de polymère PE1F de formule H-(CH₂-CH₂)ₙ-C(O)-(C₆H₄)-C(O)-(CH₂-CH₂)ₙ-H et 0,22 g de polymère PE1NF de formule H-(CH₂-CH₂)ₙ-H issu du prélèvement réalisé avant la réaction de couplage sont récupérés. Le spectre de RMN proton du polymère PE1F (TCE/C₆D₆ 2/1 v/v, 400 MHz, 363 K) permet d'observer les protons du méthylène en position α de la cétone à δ = 2,76 ppm (triplet, (CH₂-CH₂)ₙ-C**H**₂-C(O)-(C₆H₄)-C(O)-C**H**₂-(CH₂-CH₂)ₙ) et 3 signaux de protons aromatiques à δ = 7,26 ppm (triplet, 1H), 7,92 ppm (doublet, 2H), 8,43 ppm (singulet, 1H). Le taux de fonction dans le polymère PE1F est calculé en normalisant la somme des intégrales des signaux C(O)-C**H**₂-CH₂ et CH₃ du spectre RMN à 5. Ainsi dans PE1F, 88 % des extrémités de chaîne de polymère sont modifiées par une cétone. Aucun produit secondaire n'est identifié par RMN. Par conséquent, dans PE1F, 88% des chaînes polymères sont couplées.

### Synthèse de copolymères d'éthylène et de 1,3-butadiène couplés :

### Exemple 2 :

199 mL de toluène prélevés à la fontaine à solvants (SPS800 MBraun) sont introduits dans un ballon de 250 mL inerté et équipé d'une olive aimantée. 1,0 mL d'une solution de chlorure de butylmagnésium à 2,0 M dans le diéthyléther (2,0 mmol, 10 mM dans le mélange toluène/diéthyléther) est introduit dans le ballon sous agitation. 32,0 mg (50 µmol en néodyme) de {(Me₂Si(C₁₃H₈)₂)Nd(µ-BH₄)[(µ-BH₄)Li(THF)]}₂ sont ensuite introduits dans le ballon. La solution catalytique est canulée dans un réacteur de 250 mL sous atmosphère inerte. La pression dans le réacteur est réduite à 0,5 bar puis le réacteur est pressurisé à 4 bars avec un mélange éthylène/1,3-butadiène 80/20 mol/mol et la température est amenée simultanément à 80 °C. La pression est maintenue constante dans le réacteur à l'aide d'un réservoir contenant un mélange gazeux d'éthylène/1,3-butadiène à 80/20 mol/mol. Quand la quantité de monomères désirée a été consommée, ici après 33 min, le réacteur est dégazé et la température est ramenée à 20 °C. 10 mL (5 %) de la solution de polymère sont canulés hors du réacteur, puis le polymère est précipité dans du méthanol contenant du 2,6-di-*tert*-butyl-4-méthylphénol, lavé avec du méthanol et séché sous vide à 70 °C. Il est noté EBR1NF.

121 mg de 1,3-dicyanobenzène (0,95 mmol, 1 équivalent molaire de fonction nitrile/liaison carbone-Mg) dissout dans 5 mL de toluène sont ajoutés à la solution de polymère restant dans le réacteur. Après 40 min d'agitation à 80 °C, 3 mL d'une solution aqueuse d'acide chlorhydrique à 15 % sont ajoutés pour désactiver le système. La solution de polymère est versée sur du méthanol sous agitation pour précipiter le polymère. Le polymère précipité (EBR1F) est filtré, lavé au méthanol, puis séché et caractérisé. 3,76 g de polymère EBR1F et 0,21 g de polymère EBR1NF issu du prélèvement réalisé avant la réaction de couplage sont ainsi récupérés.

### Exemple 3 :

La synthèse du polymère EBR2 est identique à celle décrite dans l'exemple EBR1, à la différence que :
- le 1,0 mL d'une solution de chlorure de butylmagnésium à 2,0 M dans le diéthyléther est remplacé par 0,5 mL d'une solution de chlorure de butylmagnésium à 2,0 M dans le diéthyléther (1,0 mmol, 5 mM dans le mélange toluène/diéthyléther) ;
- la réaction de couplage est réalisé par l'ajout de 5 mL d'une solution d'adiponitrile dans le toluène à 0,095 M (0,475 mmol, 1 équivalent molaire de fonction nitrile/liaison carbone-Mg) ;
- la réaction de désactivation est réalisée après 15 minutes à 80 °C.
13,86 g de polymère EBR2F et 0,67 g de polymère EBR2NF issu du prélèvement réalisé avant la réaction de couplage sont récupérés.

### Exemple 4 :

La synthèse du polymère EBR3 est identique à celle décrite dans l'exemple EBR1, à la différence que :
- le 1,0 mL d'une solution de chlorure de butylmagnésium à 2,0 M dans le diéthyléther est remplacé par 0,57 mL d'une solution de BOMAG à 0,88 M dans l'heptane (0,5 mmol, 2,5 mM dans le mélange toluène/heptane) ;
- la réaction de couplage est réalisé par l'ajout de 5 mL d'une solution d'adiponitrile dans le toluène à 0,095 M (0,475 mmol, 1 équivalent molaire de fonction nitrile/liaison carbone-Mg) ) ;
- la réaction de désactivation est réalisée après 15 minutes à 80 °C.
14,10 g de polymère EBR3F et 0,75 g de polymère EBR3NF issu du prélèvement réalisé avant la réaction de couplage sont récupérés.

### Exemple 5 :

199 mL de toluène prélevés à la fontaine à solvants (SPS800 MBraun) sont introduits dans un ballon de 250 mL inerté et équipé d'une olive aimantée. 0,5 mL d'une solution de chlorure de butylmagnésium à 2,0 M dans le diéthyléther (1,0 mmol, 5 mM dans le mélange toluène/diéthyléther) est introduit dans le ballon sous agitation. 32,0 mg (50 µmol en néodyme) de {(Me₂Si(C₁₃H₈)₂)Nd(µ-BH₄)[(µ-BH₄)Li(THF)]}₂ sont ensuite introduits dans le ballon. La solution catalytique est canulée dans un réacteur de 250 mL sous atmosphère inerte. La pression dans le réacteur est réduite à 0,5 bar puis le réacteur est pressurisé à 4 bars avec un mélange éthylène/1,3-butadiène 80/20 mol/mol et la température est amenée simultanément à 80 °C. La pression est maintenue constante dans le réacteur à l'aide d'un réservoir contenant un mélange gazeux d'éthylène/1,3-butadiène à 80/20 mol/mol.

Après consommation de 15 g du mélange éthylène/1,3-butadiène, la pression dans le réacteur est réduite à 0,5 bar puis le réacteur est pressurisé à 4 bars d'éthylène et la température est maintenue à 80 °C. Après consommation de 1 g d'éthylène, le réacteur est dégazé et la température est ramenée à 20 °C. 10 mL (5 %) de la solution de polymère sont canulés hors du réacteur, puis le polymère est précipité dans du méthanol contenant du 2,6-di-tert-butyl-4-méthylphénol, lavé avec du méthanol et séché sous vide à 70 °C. Il est noté EBR-b-PE1NF. Les chaînes polymères avant la réaction de couplage sont des chaînes polymères à blocs constituées d'un bloc polymère statistique d'éthylène et de 1,3-butadiène et d'un bloc polyéthylène.

5 mL d'une solution d'adiponitrile dans le toluène à 0,095 M (0,475 mmol, 1 équivalent molaire de fonction nitrile/liaison carbone-Mg) ) sont ajoutés à la solution de polymère restant dans le réacteur, puis le milieu réactionnel est agité pendant 1 heure à 80 °C.

Après 40 min d'agitation à 80 °C, 3 mL d'une solution aqueuse d'acide chlorhydrique à 15 % sont ajoutés pour désactiver le système. La solution de polymère est versée sur du méthanol sous agitation pour précipiter le polymère. Le polymère précipité (EBR-b-PE1) est filtré, lavé au méthanol, puis séché et caractérisé.

15,39 g de polymère EBR-b-PE1F et 0,88 g de polymère EBR-b-PE1NF issu du prélèvement réalisé avant la réaction de couplage sont récupérés.

Les conditions de polymérisation sont données dans le tableau 1. Dans le tableau 1 figure aussi pour chaque exemple l'activité catalytique calculée sur toute la durée de la polymérisation et exprimée en kg mol⁻¹ h⁻¹. Le tableau 1 indique également l'agent de couplage utilisé. Les caractéristiques des polymères synthétisés figurent dans le tableau 2. La méthode SEC-THF a été utilisée pour déterminer les masses molaires et la microstructure des polymères a été déterminée par RMN. Le taux d'unité éthylène, le taux d'unité de 1,3-butadiène sous la configuration 1,2 (unité 1,2), sous la configuration 1,4 (unité 1,4) et le taux d'unité 1,2-cyclohexane (unité cycle) sont exprimés en pourcentage molaire par rapport à l'ensemble des unités monomères du polymère.

Les exemples 1, 2, 3 et 5 sont conformes à l'invention. L'exemple 4 est un exemple non conforme à l'invention en raison de l'utilisation d'un co-catalyseur qui n'est pas un halogénure d'un alkylmagnésien, mais un dialkylmagnésien, en l'espèce le n-butyl n-octylmagnésium (BOMAG).

Les copolymères de l'exemple 2 et 3 sont statistiques. Le copolymère de l'exemple 4 est aussi statistique. Le copolymère de l'exemple 5 est à blocs, puisqu'il est constitué de chaînes polymères couplées, chacune d'entre elles étant constituée d'un bloc polymère statistique d'éthylène et de 1,3-butadiène et d'un bloc polyéthylène.

**Tableau 1**

| Polymère | Co-catalyseur | Ratio Mg/Nd | Co-solvant (Et₂O/Mg) | Durée (min) | Activité (kg mol⁻¹ h⁻¹) | Agent de couplage |
|---|---|---|---|---|---|---|
| PE1 | C₄H₉MgCl | 320 | 4,8 | 17 | 1050 | 1,3-dicyanobenzène |
| EBR1 | C₄H₉MgCl | 40 | 4,8 | 33 | 140 | 1,3-dicyanobenzène |
| EBR2 | BOMAG | 10 | 4,8 | 93 | 185 | adiponitrile |
| EBR3 | C₄H₉MgCl | 20 | 4,8 | 100 | 175 | adiponitrile |
| EBR-*b*-PE1 | C₄H₉MgCl | 20 | 4,8 | 90* | 180* | adiponitrile |

| | | | | | | |
|---|---|---|---|---|---|---|
| * pour la polymérisation du bloc polymère d'éthylène et de 1,3-butadiène. | | | | | | |

**Tableau 2**

| Polymère | *M*ₙ (g mol⁻¹) | *Ð* | *M*ₚ** (g mol⁻¹) | Unité éthylène | Unité 1,2 | Unité 1,4 | Unité cycle |
|---|---|---|---|---|---|---|---|
| PE1NF | 1 100 | 1,1 | 1200 | 100% | - | - | - |
| PE1F | 2000 | 1,2 | 2600 | 100% | - | - | - |
| EBR1NF | 1 900 | 1,2 | 2 300 | 73,2 % | 9,7 % | 6,5 % | 10,6 % |
| EBR1F | 2 700 | 1,7 | 4 400 | 73,4 % | 9,5 % | 6,4 % | 10,7% |
| EBR2NF | 13 700 | 1,3 | 16 500 | 77,0 % | 7,4% | 5,5 % | 10,2 % |
| EBR2F | 11 000 | 1,6 | 16 500 ; 33 000 | 76,3 % | 7,6 % | 5,6 % | 10,5% |
| EBR3NF | 13 400 | 1,5 | 16 300 | 76,0 % | 7,9 % | 5,6 % | 10,5% |
| EBR3F | 11 500 | 1,8 | 14 000 | 75,9 % | 7,9 % | 5,8 % | 10,4 % |
| EBR-*b*-PE1NF | 12 800 | 1,6 | 23 000 | - | - | - | - |
| EBR-*b*-PE1F | 14 200 | 2,0 | 23 000 ; 47900 | - | - | - | - |

| | | | | | | | |
|---|---|---|---|---|---|---|---|
| ** Mp masse molaire au pic : pour EBR2F et EBR-b-PE1F, distribution bimodale. | | | | | | | |

Que les polymères soient des polyéthylènes ou des copolymères diéniques riches en éthylène, il est observé que le procédé conforme à l'invention conduit bien à la synthèse de polymères couplés.

En effet, pour les exemples 2, 3 et 5, il est observé dans les polymères couplés EBR1F, EBR2F et EBR-b-PE1F une masse molaire au pic qui est environ deux fois plus grande que la masse molaire au pic mesurée dans le polymère avant la réaction de couplage (respectivement EBR1NF, EBR2NF et EBR-b-PE1NF.

En revanche, l'utilisation à titre de co-catalyseur d'un dialkylmagnésien comme le BOMAG (exemple 4, EBR3F) ne permet pas l'obtention de polymères couplés.

Par ailleurs, l'utilisation d'un agent de couplage dont les fonctions nitrile substituent un benzène conduit aussi au couplage des chaînes avec les meilleurs rendements. En effet, dans le cas du polyéthylène, le taux de couplage quantifié par RMN est proche de 90% (exemple 1, PE1F) et dans le cas d'un copolymère d'éthylène et de 1,3-butadiène, une seule masse molaire au pic est déterminée (exemple 2, EBR1F). Aucun produit secondaire n'est détecté, ce qui traduit aussi une réaction de couplage selon un procédé sélectif dans le cas de l'utilisation d'un agent de couplage ayant au moins deux fonctions nitrile, chacune substituant un groupe aromatique.

## Revendications

1. Procédé de préparation d'un polymère couplé qui contient plus de 50% en mole d'éthylène, pourcentage molaire exprimé par rapport à la totalité des unités monomères du polymère, le polymère étant un polyéthylène ou un copolymère d'éthylène et d'un 1,3-diène et éventuellement d'un composé vinylaromatique, lequel procédé comprend les étapes successives a), b) et c)
- l'étape a) étant une réaction de polymérisation des monomères en présence d'un système catalytique à base au moins d'un métallocène de formule (I) et d'un halogénure d'un organomagnésien de formule (II)
{P(Cp¹)(Cp²)Nd(BH₄)_{(1+y)-}L_{y}-Nₓ} (I)
XMgR (II)
Cp¹ et Cp², identiques ou différents, étant choisis dans le groupe constitué par les groupes fluorényles, les groupes cyclopentadiényles et les groupes indényles, les groupes étant substitués ou non substitués,
P étant un groupe pontant les deux groupes Cp¹ et Cp², et comprenant un atome de silicium ou de carbone,
Nd désignant l'atome de néodyme,
L représentant un métal alcalin choisi dans le groupe constitué par le lithium, le sodium et le potassium,
N représentant une molécule d'un éther,
x, nombre entier ou non, étant égal ou supérieur à 0,
y, nombre entier, étant égal ou supérieur à 0,
X étant un atome d'halogène et R un alkyle,
- l'étape b) étant la réaction du produit de réaction de l'étape a) avec un composé ayant au moins deux fonctions nitrile, préférentiellement chacune substituant un groupe aromatique, distinct ou non,
- l'étape c) étant une réaction d'hydrolyse.

2. Procédé selon la revendication 1 dans lequel la réaction de polymérisation est la polymérisation de l'éthylène, la copolymérisation d'un mélange monomère d'éthylène et d'un 1,3-diène et éventuellement d'un composé vinylaromatique, de préférence le styrène.

3. Procédé selon la revendication 1 ou 2 dans lequel le 1,3-diène est le 1,3-butadiène, l'isoprène, le myrcène, le β-farnésène ou leurs mélanges.

4. Procédé selon l'une quelconque des revendications 1 à 3 dans lequel Cp¹ et Cp², identiques ou différents, sont des groupes fluorényles substitués ou des groupes fluorényles non substitués de formule C₁₃H₈, de préférence des groupes fluorényles non substitués.

5. Procédé selon l'une quelconque des revendications 1 à 4 dans lequel l'halogénure d'un alkylmagnésien est un chlorure d'un alkylmagnésien ou un bromure d'un alkylmagnésien, de préférence un chlorure d'un alkylmagnésien.

6. Procédé selon l'une quelconque des revendications 1 à 5 dans lequel l'alkyle représenté par le symbole R dans la formule (II) est un alkyle linéaire contenant 2 à 10 atomes de carbone.

7. Procédé selon l'une quelconque des revendications 1 à 6 dans lequel l'alkyle représenté par le symbole R dans la formule (II) est éthyle, n-propyle, n-butyle, n-pentyle ou n-octyle, plus préférentiellement n-butyle.

8. Procédé selon l'une quelconque des revendications 1 à 7 dans lequel le composé ayant au moins deux fonctions nitrile est un composé hydrocarboné substitué par au moins deux fonctions nitrile.

9. Procédé selon l'une quelconque des revendications 1 à 8 dans lequel le composé ayant au moins deux fonctions nitrile est un composé dans lequel le nombre de fonctions nitrile est de deux ou de trois.

10. Procédé selon l'une quelconque des revendications 1 à 9 dans lequel le composé ayant au moins deux fonctions nitrile est un alcane substitué par lesdites fonctions nitrile.

11. Procédé selon l'une quelconque des revendications 1 à 9 dans lequel le composé ayant au moins deux fonctions nitrile est un composé ayant au moins deux fonctions nitrile, chacune substituant un groupe aromatique, distinct ou non.

12. Procédé selon l'une quelconque des revendications 1 à 9 ou la revendication 11 dans lequel le composé ayant au moins deux fonctions nitrile est le benzène substitué par lesdites fonctions nitrile.

13. Polymère couplé, polymère constitué de chaînes polymères qui contiennent plus de 50% en mole d'unités éthylène et qui sont reliées entre elles par un groupement contenant au moins deux fonctions cétone, chacune des fonctions cétone étant liées de façon covalente à une unité monomère d'une chaîne polymère distincte, lequel polymère est un polyéthylène, un copolymère d'éthylène et d'un 1,3-diène et éventuellement d'un composé vinylaromatique.

14. Polymère couplé selon la revendication 13 dans lequel le groupement contenant au moins deux fonctions cétone est un groupement dans lequel lesdites fonctions cétones substituent chacune un groupe aromatique, distinct ou non.

15. Polymère couplé selon la revendication 14 dans lequel le groupe aromatique est un phényle.

## Patentansprüche

1. Verfahren zur Herstellung eines gekoppelten Polymers, das mehr als 50 Mol-% Ethylen, wobei der Molprozentanteil in Bezug auf alle der Monomereinheiten des Polymers ausgedrückt ist, enthält, wobei es sich bei dem Polymer um ein Polyethylen oder ein Copolymer von Ethylen und einem 1,3-Dien und gegebenenfalls einer vinylaromatischen Verbindung handelt, wobei das Verfahren die aufeinanderfolgenden Schritte a), b) und c) umfasst:
- Schritt a) eine Polymerisationsreaktion der Monomere in Gegenwart eines katalytischen Systems auf Basis von mindestens einem Metallocen der Formel (I) und einem Organomagnesiumhalogenid der Formel (II)
{P(Cp¹)(Cp²)Nd(BH₄)_{(1+y)-}L_{y}-Nₓ} (I)
XMgR (II)
wobei Cp¹ und Cp² gleich oder verschieden sind und aus der Gruppe bestehend aus Fluorenylgruppen, Cyclopentadienylgruppen und Indenylgruppen ausgewählt sind, wobei die Gruppen substituiert oder unsubstituiert sind,
wobei P für eine Gruppe steht, die die beiden Gruppen Cp¹ und Cp² verbrückt und ein Silicium- oder Kohlenstoffatom umfasst,
wobei Nd ein Neodymatom bezeichnet,
wobei L für ein Alkalimetall, das aus der Gruppe bestehend aus Lithium, Natrium und Kalium ausgewählt ist, steht,
N für ein Molekül eines Ethers steht,
wobei x ganzzahlig oder nicht ganzzahlig ist und gleich oder größer als 0 ist,
wobei y ganzzahlig ist und gleich oder größer als 0 ist, wobei X für ein Halogenatom steht und R für ein Alkyl steht,
- Schritt b) die Umsetzung des Reaktionsprodukts aus Schritt a) mit einer Verbindung mit mindestens zwei Nitrilfunktionen, die vorzugsweise jeweils an derselben aromatischen Gruppe oder verschiedenen aromatischen Gruppen substituiert sind,
- Schritt c) eine Hydrolysereaktion.

2. Verfahren nach Anspruch 1, wobei es sich bei der Polymerisationsreaktion um die Polymerisation von Ethylen oder die Copolymerisation einer Monomermischung von Ethylen und einem 1,3-Dien und gegebenenfalls einer vinylaromatischen Verbindung, vorzugsweise Styrol, handelt.

3. Verfahren nach Anspruch 1 oder 2, wobei es sich bei dem 1,3-Dien um 1,3-Butadien, Isopren, Myrcen, β-Farnesen oder Mischungen davon handelt.

4. Verfahren nach einem der Ansprüche 1 bis 3, wobei Cp¹ und Cp² gleich oder verschieden sind und für substituierte Fluorenylgruppen oder unsubstituierte Fluorenylgruppen der Formel C₁₃H₈, vorzugsweise unsubstituierte Fluorenylgruppen, stehen.

5. Verfahren nach einem der Ansprüche 1 bis 4, wobei es sich bei dem Alkylmagnesiumhalogenid um ein Alkylmagnesiumchlorid oder ein Alkylmagnesiumbromid, vorzugsweise ein Alkylmagnesiumchlorid, handelt.

6. Verfahren nach einem der Ansprüche 1 bis 5, wobei es sich bei dem in der Formel (II) durch das Symbol R wiedergegebenen Alkyl um ein lineares Alkyl mit 2 bis 10 Kohlenstoffatomen handelt.

7. Verfahren nach einem der Ansprüche 1 bis 6, wobei es sich bei dem in der Formel (II) durch das Symbol R wiedergegebenen Alkyl um Ethyl, n-Propyl, n-Butyl, n-Pentyl oder n-Octyl, weiter bevorzugt n-Butyl, handelt.

8. Verfahren nach einem der Ansprüche 1 bis 7, wobei es sich bei der Verbindung mit mindestens zwei Nitrilfunktionen um eine durch mindestens zwei Nitrilfunktionen substituierte Kohlenwasserstoffverbindung handelt.

9. Verfahren nach einem der Ansprüche 1 bis 8, wobei es sich bei der Verbindung mit mindestens zwei Nitrilfunktionen um eine Verbindung handelt, in der die Zahl der Nitrilfunktionen zwei oder drei beträgt.

10. Verfahren nach einem der Ansprüche 1 bis 9, wobei es sich bei der Verbindung mit mindestens zwei Nitrilfunktionen um ein durch die Nitrilfunktionen substituiertes Alkan handelt.

11. Verfahren nach einem der Ansprüche 1 bis 9, wobei es sich bei der Verbindung mit mindestens zwei Nitrilfunktionen um eine Verbindung mit mindestens zwei Nitrilfunktionen, die jeweils an derselben aromatischen Gruppe oder verschiedenen aromatischen Gruppen substituiert sind, handelt.

12. Verfahren nach einem der Ansprüche 1 bis 9 oder Anspruch 11, wobei es sich bei der Verbindung mit mindestens zwei Nitrilfunktionen um ein durch die Nitrilfunktionen substituiertes Benzol handelt.

13. Gekoppeltes Polymer, das aus Polymerketten aufgebaut ist, die mehr als 50 Mol-% Ethylen enthalten und die über eine mindestens zwei Ketonfunktionen enthaltende Gruppe miteinander verknüpft sind, wobei jede der Ketonfunktionen kovalent an eine Monomereinheit einer anderen Polymerkette gebunden ist, wobei es sich bei dem Polymer um ein Polyethylen oder ein Copolymer von Ethylen und einem 1,3-Dien und gegebenenfalls einer vinylaromatischen Verbindung handelt.

14. Gekoppeltes Polymer nach Anspruch 13, wobei es sich bei der mindestens zwei Ketonfunktionen enthaltenden Gruppe um eine Gruppe handelt, in der die Ketonfunktionen jeweils an derselben aromatischen Gruppe oder verschiedenen aromatischen Gruppen substituiert sind.

15. Gekoppeltes Polymer nach Anspruch 14, wobei es sich bei der aromatischen Gruppe um ein Phenyl handelt.

## Claims

1. Process for preparing a coupled polymer which contains more than 50 mol% of ethylene, expressed as a molar percentage relative to all of the monomer units of the polymer, the polymer being a polyethylene or a copolymer of ethylene and a 1,3-diene and optionally a vinylaromatic compound, which process comprises the successive steps a), b) and c):
- step a) being a polymerization reaction of the monomers in the presence of a catalytic system based on at least one metallocene of formula (I) and an organomagnesium halide of formula (II)
{P(Cp¹)(Cp²)Nd(BH₄)_{(1+y)-}L_{y}-Nₓ} (I)
XMgR (II)
Cp¹ and Cp², which are identical or different, being chosen from the group consisting of fluorenyl groups, cyclopentadienyl groups and indenyl groups, the groups being substituted or unsubstituted,
P being a group bridging the two groups Cp¹ and Cp² and comprising a silicon or carbon atom, Nd denoting the neodymium atom,
L representing an alkali metal chosen from the group consisting of lithium, sodium and potassium,
N representing a molecule of an ether,
x, which may or may not be an integer, being greater than or equal to 0, y, which is an integer, being greater than or equal to 0,
X being a halogen atom and R being an alkyl,
- step b) being the reaction of the reaction product of step a) with a compound containing at least two nitrile functions, each preferentially being a substituent of a same or or a different aromatic group,
- step c) being a hydrolysis reaction.

2. Process according to Claim 1, in which the polymerization reaction is the polymerization of ethylene, the copolymerization of a monomer mixture of ethylene and a 1,3-diene and optionally a vinylaromatic compound, preferably styrene.

3. Process according to Claim 1 or 2, in which the 1,3-diene is 1,3-butadiene, isoprene, myrcene, β-farnesene or mixtures thereof.

4. Process according to any one of Claims 1 to 3, in which Cp¹ and Cp², which are identical or different, are substituted fluorenyl groups or unsubstituted fluorenyl groups of formula C₁₃H₈, preferably unsubstituted fluorenyl groups.

5. Process according to any one of Claims 1 to 4, in which the alkylmagnesium halide is an alkylmagnesium chloride or an alkylmagnesium bromide, preferably an alkylmagnesium chloride.

6. Process according to any one of Claims 1 to 5, in which the alkyl represented by the symbol R in formula (II) is a linear alkyl containing 2 to 10 carbon atoms.

7. Process according to any one of Claims 1 to 6, in which the alkyl represented by the symbol R in formula (II) is ethyl, n-propyl, n-butyl, n-pentyl or n-octyl, more preferentially n-butyl.

8. Process according to any one of Claims 1 to 7, in which the compound containing at least two nitrile functions is a hydrocarbon-based compound substituted with at least two nitrile functions.

9. Process according to any one of Claims 1 to 8, in which the compound containing at least two nitrile functions is a compound in which the number of nitrile functions is two or three.

10. Process according to any one of Claims 1 to 9, in which the compound containing at least two nitrile functions is an alkane substituted with said nitrile functions.

11. Process according to any one of Claims 1 to 9, in which the compound containing at least two nitrile functions is a compound containing at least two nitrile functions, each being a substituent of a same or a different aromatic group.

12. Process according to any one of Claims 1 to 9 or Claim 11, in which the compound containing at least two nitrile functions is benzene substituted with said nitrile functions.

13. Coupled polymer, a polymer consisting of polymer chains which contain more than 50 mol% of ethylene units and which are linked together by a group containing at least two ketone functions, each of the ketone functions being covalently bonded to a monomer unit of a different polymer chain, which polymer is a polyethylene, a copolymer of ethylene and a 1,3-diene and optionally a vinylaromatic compound.

14. Coupled polymer according to Claim 13, in which the group containing at least two ketone functions is a group in which said ketone functions are each a substituent of a same or a different aromatic group.

15. Coupled polymer according to Claim 14, in which the aromatic group is a phenyl.
